# EUROPEAN PATENT SPECIFICATION

(11) **EP 1 169 583 B1**
(45) Date of publication and mention of the grant of the patent: **27.08.2003**
(21) Application number: 00928045.4
(22) Date of filing: 19.04.2000
(51) Int. Cl.: F16H 63/48, B60K 41/26

(54) **LATCH ARRANGEMENT FOR A VEHICLE**
VERRIEGELUNG FÜR EIN FAHRZEUG
DISPOSITIF DE VERROUILLAGE POUR UN VEHICULE

(30) Priority: 20.04.1999 SE 9901402
(43) Date of publication of application: 09.01.2002
(73) Proprietor: Volvo Personvagnar AB, 405 08 Göteborg (SE)
(72) Inventor: THYSELIUS, Lars, S-418 75 Gothenburg (SE)
(74) Representative: Hellbom, Lars Olof
(86) International application number: PCT/SE00/00754
(87) International publication number: WO 00/063593

(56) References cited:
- DE-A1- 19 643 303
- US-A- 3 937 105
- US-A- 4 509 624
- US-A- 5 704 457
- US-A- 5 827 149

## Description

The present invention relates to a latch arrangement for a vehicle, comprising a latch element which is adapted to cooperate with a gear wheel which is rotatable in a gear box, so that when the latch element is inserted between two teeth of the gear wheel, the vehicle is prevented from moving. A generic latch arrangement is known from US 5 827 149.

Latch arrangements of this type are used to prevent a vehicle from moving when the driver has parked and left the vehicle. In some vehicles, which are provided with automatic gear boxes, a latch arrangement is activated when the park position of the gear lever has been selected. This latch arrangement comprises a latch element which is designed to engage, in a latched position, with a gear wheel in the gear box. The gear wheel is coupled to the drive shaft of the vehicle and, in the latched position, the gear wheel and thus the drive shaft are prevented from rotating. To ensure that the driver does not forget to move the gear lever to the park position when the driver wishes to leave the vehicle, a wire is coupled from the gear lever to a latch on the ignition lock, which latch prevents the ignition key from being taken out from the ignition lock if the gear lever is not in the park position. Thus, the driver first has to move the gear lever to the park position in order for the ignition key to be taken out of the ignition lock.

If the connection between the gear lever and the gear box is interrupted, the latch arrangement is not activated when the gear lever is moved to the park position, for which reason the vehicle can move when the driver has left the vehicle, despite the fact that the park position of the gear lever has been selected. In particular if the connection between the gear lever and the gear box is electrical or hydraulic, it is difficult for the driver to tell whether this connection is interrupted. It is also difficult to tell whether the connection between the gear lever and the gear box is interrupted while driving when the gear box is an automatic gear box.

The object of the present invention is to make available a latch arrangement for a vehicle, which prevents the vehicle from moving if a fault occurs in the connection between the gear lever and the gear box.

This is achieved by means of a latch arrangement of the type set out in the introduction, in which the gear box comprises a control unit which is connected to a gear lever and which controls the gear box in relation to the set position of the gear lever, and in that the control unit is adapted to guide the latch element to the position inserted between the teeth if the connection between the control unit and the gear lever is interrupted.

Such a latch arrangement ensures that a parked vehicle does not start moving, irrespective of whether the connection between the gear lever and the control unit is interrupted. When the driver has stopped or parked the vehicle, the latch element comes to engage between the teeth of the gear wheel. When the control unit detects an interrupted connection between the gear lever and the control unit, the latch element comes to engage between the teeth of the gear wheel the next time the vehicle is stopped. The latch arrangement according to the invention thus eliminates the risk of the vehicle starting to move when it is parked, while at the same time the vehicle cannot be driven if the said connection between the gear lever and the control unit is interrupted.

The invention will be explained in more detail below with reference to illustrated embodiments represented in the attached drawings, in which:
Fig. 1 shows a diagrammatic view of a latch arrangement according to the present invention arranged in a gear box,
Fig. 2 shows a diagrammatic view of a first embodiment of a latch arrangement according to the present invention, and
Fig. 3 shows a diagrammatic view of a second embodiment of a latch arrangement according to the present invention.

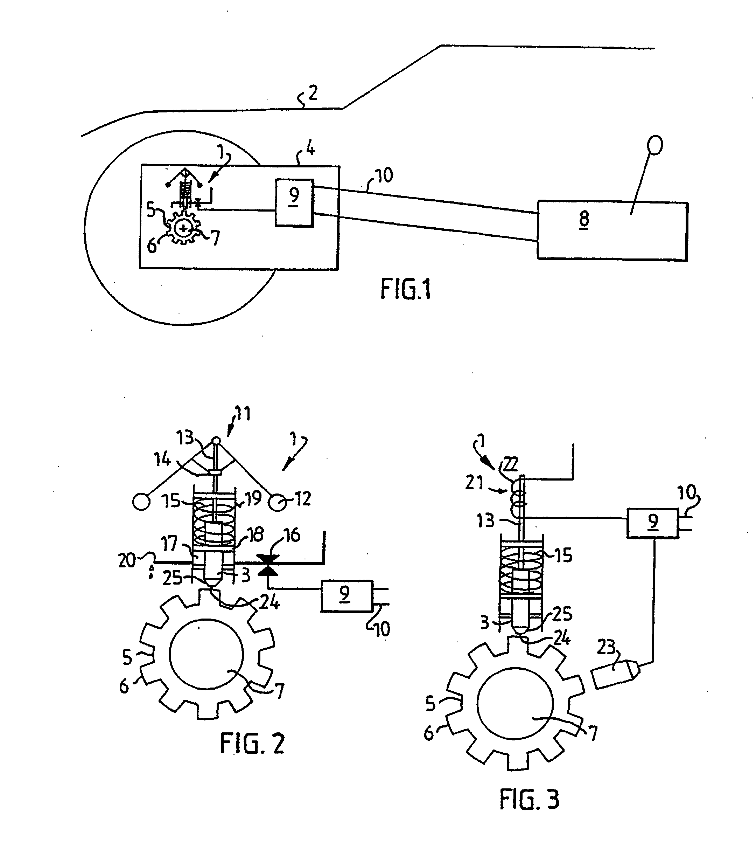

A latch arrangement 1 for a vehicle 2 according to the present invention is shown in Fig. 1. The latch arrangement 1 comprises a latch element 3 which is intended to cooperate with a gear wheel 5 which can rotate in a gear box 4, so that when the latch element 3 is inserted between two teeth 6 of the gear wheel 5, the vehicle 2 is prevented from moving. The gear wheel 5 is thus connected to a drive shaft 7 of the vehicle 2, so that the drive shaft 7 is prevented from rotating when the latch element 3 is inserted between the teeth 6 of the gear wheel 5. Alternatively, the gear wheel 5 can be coupled directly or indirectly to another gear wheel (not shown) which is connected to the drive shaft 7 of the vehicle 2.

The gear box 4 comprises a control unit 9 which is connected to a gear lever 8 and which controls the gear box 4 starting from the set position of the gear lever 8. The latch arrangement 1 according to the invention can be used in an automatic or manual gear box 4. The connection between the control unit of the gear box 4 and the gear lever 8 can consist of electrical or hydraulic lines 10. The connection can also be mechanical. When a certain position is set with the gear lever 8, the control unit controls the gear box 4 accordingly. If, for example, the gear lever 8 is set in reverse position, i.e. the vehicle 2 is to be reversed, the control unit 9 controls the gear wheels in the gear box 4 is such a way that the vehicle 2 is driven backwards.

The control unit 9 is also adapted to guide the latch element 3 to the position inserted between the teeth 6 when the gear lever 8 is set in park position and/or when an ignition member (not shown), such as an ignition key for an engine (not shown) of the vehicle 2, is in a position other than the ignition position. When the ignition key is turned from the ignition position, when the engine is to be shut off, the latch element 3 is thus guided to the position inserted between the teeth 6. The control unit 9 can be arranged to control just the latch element 3. In such an embodiment, the gear lever 8 can be mechanically coupled to the gear box 4 in a conventional manner. The control unit 9 then receives signals from a sensor (not shown) which is arranged on the gear lever 8 for obtaining information on when the gear lever 8 is in the park position.

If the connection between the gear lever 8 and the control unit 9 of the gear box 4 is interrupted, for example by an electrical line 10 between the gear lever 8 and the control unit 9 being severed, the control unit 9 will detect that such an interruption has occurred and will therafter activate the latch arrangement 1, so that the latch element 3 engages between the teeth 6 of the gear wheel 5 the next time the vehicle 2 stops.

Fig. 2 shows a diagrammatic view of a first embodiment of a latch arrangement 1 according to the present invention. The latch arrangement 1 comprises a latch element 3 which is intended to be guided in between two teeth 6 of a gear wheel 5, so that the gear wheel 5 is prevented from rotating. The latch arrangement 1 comprises a sensor which is arranged to detect the speed of the vehicle 2 and to prevent the latch arrangement 1 from engaging with the gear wheel 5 if the vehicle 2 exceeds a predetermined speed. According to the first illustrative embodiment, the sensor consists of a mechanical centrifugal regulator 11 which is arranged on the latch element 3. By preventing the latch element 3 from being driven in the direction towards the gear wheel 5 when the vehicle 2 is being driven at a speed above a predetermined speed, damage to the gear wheel 5 and latch element 3 is avoided. The centrifugal regulator 11 comprises rotating bodies 12 which are driven by the vehicle 2 and which are flung, by centrifugal force, in the direction away from a shaft 13 to which the bodies 12 are articulated connected. The bodies 12 are also connected to the latch element 3 via a displaceable element 14, so that the disdplaceable element 14 draws the latch element 3 in a direction away from the gear wheel 5 when the bodies 12 are flung, by the centrifugal force, outwards in the direction away from the shaft 13.

The latch arrangement 1 is provided with a spring member 15 in the form of a helical spring which acts with a force on the latch element 3 in a direction towards the gear wheel 5. A retaining means which can be acted on by the control unit 9 is arranged to overcome the force from the spring member 15. According to the first illustrative embodiment 3 of the latch element in Fig. 2, the retaining means consists of a hydraulic valve 16 which, upon actuation by the control unit 9, ensures that the latch element 3 can be freely displaced in the direction towards the gear wheel 5. By opening the hydraulic valve 16, hydaulic fluid is supplied to a space 17 formed in the latch arrangement 1, which hydraulic fluid under pressure overcomes the force from the spring member 15 and thus prevents the latch element 3 from being displaced in the direction towards the gear wheel 5. The space in the latch arrangement 1 is formed by a flange 18 arranged on the latch element 3 and a cylinder 19 arranged around the latch element 3. The latch element 3 and its flange 18 thus function as a displaceable piston in the cylinder 19. The cylinder 19 is provided with an opening 20 through which hydraulic fluid can continuously leave the space 17. By closing the hydraulic valve 16, the hydraulic fluid is pressed out of the space 17 through the opening 20 under the action of the spring member 15. The latch element 3 is thus displaced in the direction towards the gear wheel 5 and prevents the gear wheel 5 from rotating.

Fig. 3 shows a second illustrative embodiment of a latch arrangement 1 according to the invention. The retaining means here comprises an electromagnetic power device 21 which, upon actuation by the control unit 9, ensures that the latch element 3 is prevented from being moved in the direction towards the gear wheel 5. The electromagnetic power device 21 comprises a spool 22 to which current is supplied with the aid of the control unit 9. The shaft 13 arranged on the latch element 3 is made of a magnetic material, such as steel, and extends through the spool 22. When electrical current is connected to the spool 22, the shaft 13 is retained by the spool 22, as is show in Fig. 3. According to this second illustrative embodiment, the speed-detecting sensor consists of a detector 23 which is arranged on the vehicle and which detects the rotation of the gear wheel 5. The detector 23 can also be arranged to detect the rotation of a second component rotating on the vehicle 2, which is proportional to the speed of the vehicle 2. When the gear wheel 5 rotates, the detector 23 emits signals to the control unit 9 which thus ensures that the relay 21 retains the shaft 13 so that the latch element 3 cannot be moved in the direction towards the gear wheel 5. Damage to the latch element 3 and gear wheel 5 is thus prevented.

One end 24 of the latch element 3 directed towards the gear wheel 5 is preferably provided with a bevel 25 so that the latch element 3 will rebound on the teeth 6 of the gear wheel 5 if the force acting against the spring member 15 disappears when the gear wheel rotates. The bevel 25 also facilitates insertion of the latch element between the teeth 6.

The latch arrangement 1 can also be provided with a free coupling (not shown) which can be acted on manually. With the free coupling, the latch element 3 is released from the gear wheel 5, so that the vehicle can move despite the latch arrangement 1 having been activated. The free coupling means that the vehicle 2 can be towed when the latch arrangement 1 has been activated.

## Claims

1. Latch arrangement for a vehicle (2), comprising a latch element (3) which is adapted to cooperate with a gear wheel (5) which is rotatable in a gear box (4), so that when the latch element (3) is inserted between two teeth (6) of the gear wheel (5), the vehicle (2) is prevented from moving, whereby the gear box (4) comprises a control unit (9) which is connected to a gear lever (8) and which controls the gear box (4) in relation to the set position of the gear lever (8), **characterized in that** the control unit (9) is adapted to guide the latch element (3) to the position inserted between the teeth (6) if the connection between the control unit (9) and the gear lever (8) is interrupted.

2. Latch arrangement according to Claim 1, **characterized in that** the latch element (3) is provided with a spring member (15) which pretensions the latch element (3) in a direction towards the gear wheel (5), and **in that** a retaining means (16, 21) which can be acted on by the control unit (9) is arranged to overcome the force from the spring member (15).

3. Latch arrangement according to Claim 2, **characterized in that** the retaining means comprises a hydraulic valve (16) which, upon actuation by the control unit (9), ensures that the latch element (3) can be freely displaced in the direction towards the gear wheel (5).

4. Latch arrangement according to Claim 2, **characterized in that** the retaining means comprises an electromagnetic power device (21) which, upon actuation by the control unit (9), ensures that the latch element (3) is prevented from being displaced in the direction towards the gear wheel (5).

5. Latch arrangement according to any of the preceding claims, **characterized in that** a sensor (11, 23) is arranged to detect the speed of the vehicle (2), and **in that** the latch element (3) is prevented from engaging with the gear wheel (5) if the vehicle exceeds a predetermined speed.

6. Latch arrangement according to Claim 5, **characterized in that** the sensor is a detector (23) which detects the rotation of the gear wheel (5), which detector (23) is connected to the control unit (9).

7. Latch arrangement according to Claim 5, **characterized in that** the sensor is a mechanical centrifugal regulator (11) which is coupled to the latch element (3).

8. Latch arrangement according to any of the preceding claims, **characterized in that** the connection between the gear lever (8) and the control unit (9) consists of electrical lines (10).

9. Latch arrangement according to any of the preceding claims, **characterized in that** the connection between the gear lever (8) and the control unit (9) consists of hydraulic lines (10).

10. Latch arrangement according to any of the preceding claims, **characterized in that** the gear box (4) is an automatic gear box.

## Patentansprüche

1. Verriegelungsanordnung für ein Fahrzeug (2), mit einem Verriegelungselement (3), das so ausgestaltet ist, dass es mit einem Zahnrad (5) zusammen arbeitet, welches in einem Getriebekasten (4) drehbar ist, so dass, wenn das Verriegelungselement (3) zwischen zwei Zähne (3) des Zahnrads (5) eingeführt ist, eine Bewegung des Fahrzeugs (2) verhindert wird, wobei der Getriebekasten (4) eine Steuerungseinheit (9) aufweist, welche mit einem Schalthebel (8) verbunden ist und den Getriebekasten (4) mit Bezug auf die gewählte Stellung des Schalthebels (8) steuert, **dadurch gekennzeichnet, dass** die Steuerungseinheit (9) so ausgestaltet ist, dass sie das Verriegelungselement (3) in die zwischen die Zähne (6) eingeführte Position führt, wenn die Verbindung zwischen der Steuerungseinheit (9) und dem Schalthebel (8) unterbrochen ist.

2. Verriegelungsanordnung nach Anspruch 1, **dadurch gekennzeichnet, dass** das Verriegelungselement (3) mit einem Federelement (15) versehen ist, welches das Verriegelungselement (3) in Richtung des Zahnrads (5) vorspannt, und dass ein Rückhaltemittel (16, 21), auf welches mittels der Steuerungseinheit (9) eingewirkt werden kann, angeordnet ist, um die Kraft von dem Federelement (15) zu überwinden.

3. Verriegelungsanordnung nach Anspruch 2, **dadurch gekennzeichnet, dass** das Rückhaltemittel ein hydraulisches Ventil (16) aufweist, welches bei Betätigung mittels der Steuerungseinheit (9) sicherstellt, dass das Verriegelungselement (3) frei in Richtung des Zahnrads (5) verschoben werden kann.

4. Verriegelungsanordnung nach Anspruch 2, **dadurch gekennzeichnet, dass** das Rückhaltemittel eine elektromagnetische Energieeinrichtung (21) aufweist, welche bei Betätigung mittels der Steuerungseinheit (9) sicherstellt, dass eine Verschiebung des Verriegelungselements (3) in Richtung des Zahnrads (5) verhindert wird.

5. Verriegelungsanordnung nach einem der vorangehenden Ansprüche, **dadurch gekennzeichnet, dass** ein Sensor (11, 23) vorgesehen ist, um die Geschwindigkeit des Fahrzeugs (2) zu erfassen, und dass ein Eingriff des Verriegelungselements (3) mit dem Zahnrad (5) verhindert wird, wenn das Fahrzeug eine vorbestimmte Geschwindigkeit überschreitet.

6. Verriegelungsanordnung nach Anspruch 5, **dadurch gekennzeichnet, dass** der Sensor ein Detektor (23) ist, welcher die Drehung des Zahnrads (5) erfasst und mit der Steuerungseinheit (9) verbunden ist.

7. Verriegelungsanordnung nach Anspruch 5, **dadurch gekennzeichnet, dass** der Sensor ein mechanischer Zentrifugalregler (11) ist, der mit dem Verriegelungselement (3) verbunden ist.

8. Verriegelungsanordnung nach einem der vorangehenden Ansprüche, **dadurch gekennzeichnet, dass** die Verbindung zwischen dem Schalthebel (8) und der Steuerungseinheit (9) aus elektrischen Leitungen (10) besteht.

9. Verriegelungsanordnung nach einem der vorangehenden Ansprüche, **dadurch gekennzeichnet, dass** die Verbindung zwischen dem Schalthebel (8) und der Steuerungseinheit (9) aus hydraulischen Leitungen (10) besteht.

10. Verriegelungsanordnung nach einem der vorangehenden Ansprüche, **dadurch gekennzeichnet, dass** der Getriebekasten (4) ein Automatikgetriebekasten ist.

## Revendications

1. Dispositif de verrouillage pour un véhicule (2) comprenant un élément de verrouillage (3) qui est adapté pour coopérer avec une roue dentée (5) qui est rotative dans une boîte de vitesses (4), de manière que, lorsque l'élément de verrouillage est inséré entre deux dents (6) de la roue dentée (5), le véhicule (2) soit empêché de se déplacer, la boîte de vitesses (4) comprenant une unité de commande (9) qui est reliée à un levier de vitesses (8) et qui commande la boîte de vitesses (4) en fonction de la position réglée du levier de vitesses (8), **caractérisé en ce que** l'unité de commande (9) est adaptée pour guider l'élément de verrouillage (3) jusqu'à la position insérée entre les dents (6) si la liaison entre l'unité de commande (9) et le levier de vitesses (8) est interrompue.

2. Dispositif de verrouillage selon la revendication 1, **caractérisé en ce que** l'élément de verrouillage (3) est muni d'un élément formant ressort (15) qui précontraint l'élément de verrouillage (3) dans une direction allant vers la roue dentée (5), et **en ce qu'**un moyen de retenue (16, 21) sur lequel l'unité de commande (9) peut agir est agencé pour surmonter la force issue de l'élément formant ressort (15).

3. Dispositif de verrouillage selon la revendication 2, **caractérisé en ce que** le moyen de retenue comprend une soupape hydraulique (16) qui, lorsqu'elle est actionnée par l'unité de commande (9), fait en sorte que l'élément de verrouillage (3) puisse être librement déplacé dans une direction allant vers la roue dentée (5).

4. Dispositif de verrouillage selon la revendication 2, **caractérisé en ce que** le moyen de retenue comprend un dispositif à énergie électromagnétique (21) qui, lorsqu'il est actionné par l'unité de commande (9), garantit. que l'élément de verrouillage (3) est empêché d'être déplacé dans une direction allant vers la roue dentée (5).

5. Dispositif de verrouillage selon l'une quelconque des revendications précédentes, **caractérisé en ce qu'**un capteur (11, 23) est agencé pour détecter la vitesse du véhicule (2) et **en ce que** l'élément de verrouillage (3) est empêché d'entrer en prise avec la roue dentée (5) si le véhicule excède une vitesse prédéterminée.

6. Dispositif de verrouillage selon la revendication 5, **caractérisé en ce que** le capteur est un détecteur (23) qui détecte la rotation de la roue dentée (5), lequel détecteur (23) est relié à l'unité de commande (9).

7. Dispositif de verrouillage selon la revendication 5, **caractérisé en ce que** le capteur est un régulateur centrifuge mécanique (11) qui est accouplé à l'élément de verrouillage (3).

8. Dispositif de verrouillage selon l'une quelconque des revendications précédentes, **caractérisé en ce que** la liaison entre le levier de vitesses (8) et l'unité de commande (9) est constituée par des lignes électriques (10)

9. Dispositif de verrouillage selon une quelconque des revendications précédentes, **caractérisé en ce que** la liaison entre le levier de vitesses (8) et l'unité de commande (9) est constituée par des lignes hydrauliques (10).

10. Dispositif de verrouillage selon une quelconque des revendications précédentes, **caractérisé en ce que** la boîte de vitesses (4) est une boîte de vitesses automatique.
